Europäisches Patentamt

(19) European Patent Office

Office européen des brevets

(11) Publication number: **0 040 687**

**B1**

(12) **EUROPEAN PATENT SPECIFICATION**

(45) Date of publication of patent specification: **19.12.84**

(51) Int. Cl.³: **G 11 B 23/04,** G 11 B 15/04, G 11 B 15/06

(21) Application number: **81102424.9**

(22) Date of filing: **31.03.81**

(54) **Magnetic tape cartridge with file protect feature.**

(30) Priority: **27.05.80 US 153801**

(43) Date of publication of application:
**02.12.81 Bulletin 81/48**

(45) Publication of the grant of the patent:
**19.12.84 Bulletin 84/51**

(84) Designated Contracting States:
**DE FR GB**

(56) References cited:
**CH-A- 600 479**
**DE-A-2 728 829**
**DE-B-2 604 172**
**US-A-3 838 291**
**US-A-3 913 519**

(73) Proprietor: **International Business Machines Corporation**
**Old Orchard Road**
**Armonk, N.Y. 10504 (US)**

(72) Inventor: **Larson, Richard Thor**
**80 Manhattan Drive**
**Boulder Colorado 80303 (US)**
Inventor: **McMurtry David Harwood**
**5945 E. Paseo Cimarron**
**Tucson, Arizona 85710 (US)**
Inventor: **Rinkleib, Helfried Otto**
**9846 E. Rosewoos St.**
**Tucson, Arizona 85710 (US)**

(74) Representative: **Lewis, Alan John**
**IBM United Kingdom Patent Operations Hursley Park**
**Winchester, Hants, S021 2JN (GB)**

Courier Press, Leamington Spa, England.

## Description

The invention relates to a magnetic tape cartridge with file protect feature.

In magnetic recording, and particularly in the case of portable magnetic recording devices such as a cartridge containing magnetic recording tape, it is sometimes important to provide measures to prevent inadvertent recording on the magnetic medium. This function, commonly known as "file protect", is necessary to avoid accidental erasure of information already recorded on the medium and not intended to be replaced by recording over it. When enabled, the file protect function effectively disables the recording or writing circuitry of the device with which the medium is being used so as to prevent operation of the writing circuitry so long as the file protect feature is in operation.

A number of approaches have been employed in the past to provide a file protect function.

U.S. specification No. 3,692,956 (Northrup) discloses a magnetic tape cartridge comprising a housing having two opposed walls forming a cavity containing a tape supply reel and a take-up reel. The cartridge has file protect means for controlling recording on the tape which include an actuator device formed by a disc rotatably mounted on the housing. The disc co-operates with sensing means comprising an infrared light source permanently mounted within the housing and a sensor unit interior of the housing and acts to permit or prevent light reaching the sensor unit when writing is prohibited.

U.S. specification No. 4,003,088 (Schwarzt) discloses apparatus for writing and/or reading data from a selected side of a floppy disk encased within a protective envelope. A pair of spaced holes are provided on a common radius of the envelope. A single hole is provided in the disk and aligned with one of the spaced holes once per disk revolution. Each of the holes in the envelope generates the write enable function for one side of the disk. A light emitting/light receiving means is mounted on a tape deck which coacts with the disk to read and/or write data thereon. A movable shutter mechanism is associated with the envelope so that the light beam emanating from the light source through one of the holes in the disk and envelope is either blocked or is allowed to impinge on the light receiving means. The write/read function is enabled for one of the sides of the disk when light is allowed to pass through one of the holes.

U.S. specification No. 3,950,786 (Shapley) discloses a magnetic tape cassette employing a sliding door to enable or inhibit recording on the tape. A cavity is provided in the rear wall of the cassette for receiving a cavity sensing mechanism, and the position of the sliding door relative to the cavity determines whether the cavity is sensed by the sensing mechanism to permit or prevent recording on the tape.

U.S. specification No. 3,913,519 (Sugano) discloses a magnetic tape cartridge comprising a housing having a peripheral wall and two side walls forming a tape containing cavity therebetween. The Sugano cartridge comprises means for detecting a predetermined position along the tape which is indicative of a small supply of usable tape remaining on the supply reel for recording. The Sugano detection means comprise a shaft carrying intermediate its ends a disc for co-operation with sensing means capable of providing an output when the predetermined position along the tape is reached. The Sugano specification is in no way concerned with preventing recording on the magnetic tape, that is with file protection.

German specification No. 26 04 172 (Grimm) discloses a magnetic tape cassette comprising a flat rectangular housing containing supply and take-up reels and a spool of tape wound between the two reels. The cassette further comprising file protect means comprising an actuator device mounted in the housing and accessible from the exterior of the cassette to permit predetermined rotational movement of the actuator device. The actuator device registers with an access opening in the wall of the housing which permits entry of sensing means capable of providing an output signal dependant on the rotational position of the actuator device.

It is an object of the invention to provide an improved cartridge containing magnetic recording medium e.g. tape. The improved cartridge minimises the risk of tape contamination due to the file protect feature. In addition and in accordance with the present invention, structure providing the file protect function is employed which is reliable, sturdy, and economical to manufacture.

The invention provides a cartridge containing (or for containing) magnetic recording medium, said cartridge comprising a housing having side walls, a top wall and a bottom wall forming a cavity therebetween containing (or for containing) the magnetic medium and file protect means comprising an actuator device mounted in the housing and accessible from the exterior of the cartridge to permit predetermined rotational movement of the actuator device, the actuator device registering with an access opening in one of the peripheral walls of the housing to permit entry of sensing means capable of providing an output signal dependent on the rotational position of the actuator device, said file protect means being further characterised in that the actuator devices comprises a shaft carrying intermediate its ends a disc of which a segment is missing for co-operation with the sensing means, that the actuator device is rotatable within a cylindrical sleeve-like element which extends between the top wall and the bottom wall of the housing, that the actuator device further comprises a first circular bearing plate at one end of the shaft which forms an axial bearing with the inner surface of the bottom wall of the housing, and that the sleeve-like element provides a rotary bearing surface for the periphery of both the disc and the end bearing plate.

The invention will now be more particularly described by reference to various embodiments thereof which are illustrated in the accompanying drawings, in which:—

FIG. 1 is a perspective view of a cartridge in accordance with the present invention; for holding a magnetic medium and provided with a file protect device;

FIG. 2 is a plan view on an enlarged scale of the sleeve member forming part of the file protect device of FIG. 1;

FIG. 3 is an elevation view of this sleeve member;

FIGS. 4 and 5 are perspective views of one embodiment of a rotary file protect actuator, showing rotational positions of the actuator which are 180° apart;

FIG. 6 is a perspective view of an alternate embodiment of a rotary file protect actuator;

FIG. 7 is a perspective view of a sleeve member for use with the rotary actuator of FIG. 6; and

FIG. 8 is a perspective view of a file protect actuator structure using mechanical means to sense the actuator position.

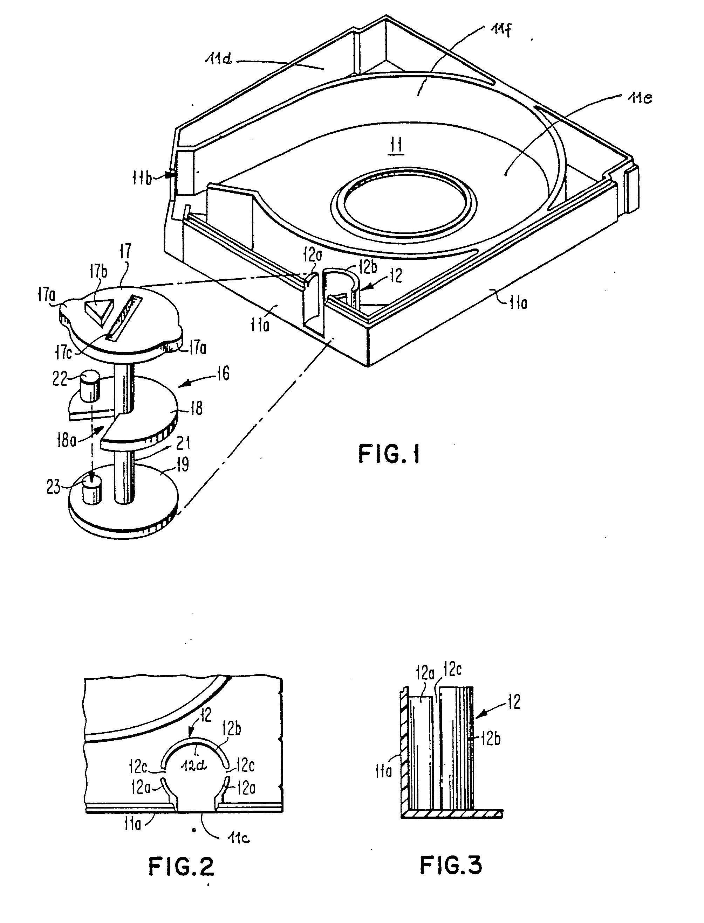

FIG. 1 illustrates a cartridge member 11 in which the present invention may be employed. Cartridge member 11 is adapted to house a magnetic recording member such as a reel of magnetic tape (not shown), one end of the recording member being withdrawn from cartridge 11 through an opening 11b. It will be understood that after the magnetic recording member is placed in cartridge 11, a top cover (not shown) will be provided to form essentially a contamination free enclosure for the record member.

A sleeve member in accordance with the present invention, is indicated as 12 in FIG. 1 and is shown in plan and elevation views in FIGS. 2 and 3. Sleeve 12 is preferably molded as an integral part of cartridge wall 11a, and includes two extending portions 12a which are spaced from a curved portion 12b to form a pair of slots 12c in sleeve 12 spaced 180° from each other.

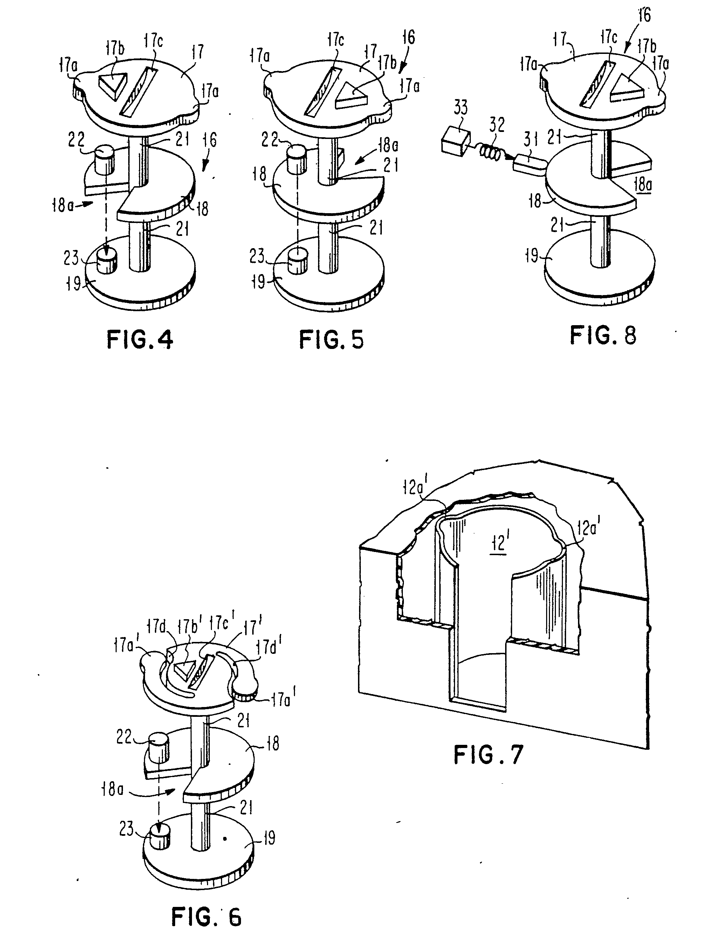

Sleeve 12 coacts with a file protect rotary actuator 16 shown in exploded form in FIG. 1 and in greater detail in perspective in FIGS. 4 and 5. Rotary actuator 16 includes an outer disk 17, a center or middle disk 18 and an inner disk 19, all mounted on a common shaft 21. Outer disk 17 is provided with two projections 17a thereon spaced 180° apart. Disk 17 also includes an indicator 17b which provides an indication of the position of the file protect actuator, and a groove 17c into which a screwdriver or other device may be inserted to rotate the file protect actuator.

Center disk 18 includes an interrupted portion or segment 18a. In operation, disk 18 is operable to either interrupt or transmit light from a light source 22 to a light sensor 23 to control the file protect function. Source 22 and sensor 23 are preferably mounted on the tape deck (not shown) in which cartridge 11 is mounted, and occupy the positions relative to disk 18 shown in FIGS. 4 and 5. In the position shown in FIG. 4, the interrupted segment 18a is aligned with source 22 and sensor 23 so that light from source 22 may be transmitted to sensor 23. In the position shown in FIG. 5, which represents a 180° rotation from the position of FIG. 4, disk 18 prevents transmission of light from source 22 to sensor 23. The output of sensor 23 is used to enable or disable the circuits for recording on the magnetic medium in cartridge 11. Lower disk 19 is provided primarily to give support to the actuator when positioned in sleeve 12.

File protect actuator 16 is inserted into sleeve 12 with projections 17a fitting into slots 12c so that two locking positions are identified 180° apart from each other. At one position, the file protect actuator permits a write operation and at the second position, displaced 180° of rotation from the first, the file protect device prevents writing of data on the record member. During other rotational positions of upper disk 17, slotted sleeve 12 will flex. This flexing provides a force against rotation of actuator 16, to prevent accidental rotation by requiring a deliberate action to change the actuator position. In the preferred embodiment, as best shown in FIG. 3, the portions 12a of sleeve 12 immediately adjacent the cartridge wall 11a are lower in height than the portion 12b of the sleeve to the rear of the slots 12c away from the cartridge wall, so that only one of projections 17a contacts sleeve 12 during rotation of the actuator.

FIGS. 6 and 7 illustrate an alternate embodiment of the invention in which upper disk 17′ has projections 17a′ which are flexible relative to the disk by virtue of grooves 17d′ cut therein as shown in FIG. 6. Inner disk 18 and lower disk 19 may be essentially the same as shown in FIG. 4, disk 18 having the interrupted segment 18a as before to control the passage of light or a mechanical element and hence effect the file protect function.

The file protect rotary actuator shown in FIG. 6 coacts with the sleeve member 12′ in FIG. 7. Sleeve 12′ does not have slots therein, but has two diametrically opposed extensions 12a′ which receive the projections 17a′ of disk 17′. When the actuator is rotated by application of force to groove 17c′, flexible extensions 17a′ flex to permit rotation of the actuator while still providing sufficient resistance to prevent inadvertent rotation of the actuator. As in the embodiment of FIG. 4, in one position in which projections 17a′ engage extensions 12a′ of sleeve 12′, the interrupted segment 18a of disk 18 is positioned to allow transmission of light from source 22 to sensor 23 for controlling the file protect function. In the rotated position 180° from that shown in FIG. 6, interrupted segment 18a has moved so that disk 18 blocks light from source 22 to sensor 23, thus inhibiting writing on the magnetic record medium in cartridge 11.

FIG. 8 illustrates an alternate embodiment of the invention employing a mechanical element to sense the position of the file protect actuator. The actuator 16 may be that shown in FIGS. 4 and 5 including outer disk 17, inner disk 18 having interrupted segment 18a, and lower disk 19. A mechanical element such as a plunger 31 is urged toward and bears against the periphery of disk 18 by a spring 32 when in the position shown in FIG. 8. When the actuator is rotated 180°, interrupted segment 18a of disk 18 is positioned adjacent plunger 31, and the force of spring 32 forces plunger 31 into opening 18a to thereby operate a limit switch 33. Switch 33 is connected to control the circuitry for recording on the magnetic medium in a manner similar to that of sensor 23 in FIGS. 4 and 5. Thus, the recording circuitry may be enabled or disabled, depending on the position of actuator 16, to provide the file protect function.

It will be understood that although the illustrated embodiments show the inner disk 18 having an interrupted portion 18a for controlling the file protect function, it will be apparent that either outer disk 17 or lower disk 19 could be provided with an interrupted portion to control this function.

It will be apparent that the structure of this invention is such that even if an operator should inadvertently not fully rotate the disk to one of the 180° detent positions, the photocell structure will not be damaged. Additionally, although the illustrated embodiment shows detent projections 17a on the outer disk 17, it will be evident that such projections could be provided on either disk 18 or 19, or on all of disks 17, 18 and 19.

Thus, it will be seen that the present invention provides a simple, economical and reliable means to implement a file protect function in a cartridge member carrying a magnetic recording medium, to prevent inadvertent recording on the medium.

The present application comprises subject-matter in common with European patent application No. 81102423.1, publication No. 40686.

## Claims

1. A cartridge containing (or for containing) magnetic recording medium, said cartridge comprising a housing (11) having side walls (11a), a top wall (11d) and a bottom wall (11e) forming a cavity therebetween containing (or for containing) the magnetic medium and file protect means comprising an actuator device (16) mounted in the housing and accessible from the exterior of the cartridge to permit predetermined rotational movement of the actuator device (16), the actuator device (16) registering with an access opening (11c) in one of the peripheral walls (11a) of the housing (11) to permit entry of sensing means (22, 23) capable of providing an output signal dependent on the rotational position of the actuator device (16), said file protect means being further characterised in that

the actuator devices comprises a shaft (21) carrying intermediate its ends a disc (18) of which a segment (18a) is missing for co-operation with the sensing means (22, 23), that

the actuator device is rotatable within a cylindrical sleeve-like element (12) which extends between the top wall (11d) and the bottom wall (11e) of the housing (11), that

the actuator device further comprises a first circular bearing plate (19) at one end of the shaft (21) which forms an axial bearing with the inner surface of the bottom wall (11e) of the housing, and that

the sleeve-like element (12) provides a rotary bearing surface (12d) for the periphery of both the disc (18) and the end bearing plate (19).

2. A cartridge as claimed in claim 1, further characterised in that the actuator device (16) further comprises a second circular bearing plate (17) at the other end of the shaft (21) which engages the inner bearing surface (12d) of the element (12) and closes that end of the sleeve-like element (12), said plate (17) comprising means (17c), accessible from the exterior of the cartridge, to permit manual rotation of the device.

3. A cartridge as claimed in claim 1 or 2, further characterised in that the housing (11) comprises an inner wall (11f) dividing the cavity into two zones, a tape containing zone which is closed except for a tape exit opening (11b) and a file protect zone which is substantially closed except for the access opening (11c) whereby passage of contamination from the file protect zone to the tape zone is prevented.

4. A cartridge as claimed in claim 1, 2 or 3, in which the disc (18) has an aperture and is rotatably movable between a first position in which radiation (e.g. light) from a suitably located radiation source (22) passes through the aperture and is incident on read/write control detector means (23) and a second position in which the radiation is incident on the disc (18) and is thereby prevented from reaching the detector means (23), further characterised in that a segment (18a) of the disc (18) is removed to provide the aperture.

5. A cartridge as claimed in claim 1, 2 or 3 further characterised in that the periphery of the disc (18) is edged profiled so that the rotational position of the disc can be detected by sensing means (33) comprising a cam follower (31) engaging the edge profile and passing through the access opening (11c) in one of the peripheral walls (11a) of the housing (11).

6. A cartridge as claimed in any one of claims 1 to 5, further characterised in that the actuator device (16) comprises means (17b), visible from exterior of the cartridge, indicating the rotational position thereof.

## Patentansprüche

1. Kassette mit (oder für) Magnetaufzeichnungsträger, wobei die Kassette ein aus Seitenwänden (11a), einer Oberseite (11d) und einer Unterseite (11e) bestehendes und einen Hohlraum zur Aufnahme des Magnetträgers bildendes Gehäuse (11) und ein Speicherschutzmittel besitzt, welche eine im Gehäuse montierte Betätigungsvorrichtung (16) besitzt, die von ausserhalb der Kassette zugänglich ist, um eine bestimmte Drehbewegung durchführen zu können, wobei die Betätigungsvorrichtung (16) einer in einer der Seitenwände (11a) des Gehäuses (11) vorgesehenen Zugangsöffnung (11c) gegenüberliegt, welche den Eintritt von Tastmitteln (22, 23) erlaubt, die ein von der Drehstellung der Betätigungsvorrichtung (16) abhängiges Ausgangssignal liefern können, wobei das Speicherschutzmittel weiterhin dadurch gekennzeichnet ist, dass

die Betätigungsvorrichtung eine Welle (21) mit einer zwischen ihren Enden angeordneten Scheibe (18) enthält, bei der ein Segment (18a) zur Zusammenarbeit mit den Tastmitteln (22, 23) fehlt,

die Betätigungsvorrichtung innerhalb eines zylindrischen, hülsenförmigen Teils (12), der sich zwischen Oberseite (11d) und Unterseite (11e) des Gehäuses (11) erstreckt, drehbar ist,

die Betätigungsvorrichtung ausserdem an einem Ende der Welle (21) eine erste kreisförmige Lagerplatte (19) besitzt, die mit der Innenfläche der Gehäuseunterseite (11e) ein Axiallager bildet,

und der hülsenförmige Teil (12) eine Drehlagerfläche (12d) für den Umfang der Scheibe (18) sowie der Endlagerplatte (19) bildet.

2. Kassette gemäss Anspruch 1, ferner dadurch gekennzeichnet, dass die Betätigungsvorrichtung (16) ausserdem am anderen Ende der Welle (21) eine zweite kreisförmige Lagerplatte (17) besitzt, die mit der inneren Lagerfläche (12d) des Teils (12) zusammenwirkt und den Abschluss dieses Endes des hülsenförmigen Teils (12) bildet, wobei diese Platte (17) von ausserhalb der Kassette zugängliche Mittel (17c) zum manuellen Drehen der Betätigungsvorrichtung besitzt.

3. Kassette gemäss Anspruch 1 oder 2, ferner dadurch gekennzeichnet, dass das Gehäuse (11) eine Innenwand (11f) besitzt, die den Hohlraum in zwei Bereiche unterteilt, einen Bandaufnahmebereich, der mit Ausnahme einer Bandaustrittsöffnung (11b) geschlossen ist, und einen Speicherschutzbereich, der mit Ausnahme der Zugangsöffnung (11c) im wesentlichen geschlossen ist, wodurch ein Durchtritt von Fremdkörpern vom Speicherschutzbereich zum Bandaufnahmebereich verhindert wird.

4. Kassette gemäss Anspruch 1, 2 oder 3, bei der die Scheibe (18) eine Öffnung aufweist und zwischen einer ersten Position, in der ein Strahl (z.B. Lichtstrahl) von einer entsprechend angebrachten Strahlenquelle (22) durch diese Öffnung auf Schreib/Lesesteuer-Detektormittel (23) auftrifft, und einer zweiten Position drehbar ist, in der der Strahl auf die Scheibe auftrifft und die Detektormittel (23) nicht erreicht, ferner dadurch gekennzeichnet, dass bei der Scheibe (18) ein Segment (18a) fehlt, um diese Öffnung zu bilden.

5. Kassette gemäss 1, 2 oder 3, ferner dadurch gekennzeichnet, dass der Umfang der Scheibe (18) so profiliert ist, dass die Drehposition der Scheibe mit Tastmitteln (33) abgetastet werden kann, welche ein Kurventastglied (31) umfassen, das mit dem Profil zusammenwirkt und durch die Zugangsöffnung (11c) in einer der Seitenwände (11a) des Gehäuses (11) greift.

6. Kassette gemäss irgendeinem der Ansprüche 1 bis 5, ferner dadurch gekennzeichnet, dass die Betätigungsvorrichtung (16) von ausserhalb der Kassette sichtbare Mittel (17b) umfasst, die deren Drehposition anzeigen.

## Revendications

1. Cartouche contenant (ou destinée à contenir) un support d'enregistrement magnétique, ladite cartouche comprenant un boîtier (11) comportant des parois latérales (11a), une paroi supérieure (11b) et une paroi inférieure (11e) formant entre elles une cavité contenant (ou destinée à contenir) le support magnétique et un moyen de protection de fichier comprenant un dispositif d'actionnement (16) monté dans le boîtier et auquel on peut accéder de l'extérieur de la cartouche pour pouvoir lui imprimer un mouvement de rotation prédéterminé, le dispositif d'actionnement (16) se trouvant en regard d'une ouverture d'accès (11c) de l'une des parois périphériques (11a) du boîtier (11) pour permettre l'entrée de moyens de détection (22, 23) pouvant fournir un signal de sortie en fonction de la position de rotation du dispositif d'actionnement (16), ledit moyen de protection de fichier étant en outre caractérisé par le fait que:

le dispositif d'actionnement comprend un axe (21) supportant entre ses extrémités un disque (18) dont un segment (18a) est manquant en vue d'une coopération avec les moyens de détection (22, 23),

le dispositif d'actionnement peut tourner à l'intérieur d'un élément cylindrique (12) analogue à un manchon, qui s'étend entre la paroi supérieure (11d) et la paroi inférieure (11e) du boîtier (11),

le dispositif d'actionnement comprend en outre à une des extrémités de l'axe (21) une première plaque d'appui circulaire (19) qui forme un appui axial avec la surface intérieure de la paroi inférieure (11e) du boîtier, et

l'élément (12) analogue à un manchon constitue une surface d'appui circulaire (12d) pour la périphérie tant du disque (18) que de la plaque d'appui d'extrémité (19).

2. Cartouche selon la revendication 1, caractérisée en outre par le fait que le dispositif d'actionnement (16) comprend encore à l'autre extrémité de l'axe (21) une seconde plaque d'appui circulaire (17) qui porte contre la surface d'appui intérieure (12d) de l'élément (12) et ferme cette extrémité de l'élément (12) analogue à un manchon, ladite plaque (7) comprenant un moyen (17c) accessible de l'extérieur de la cartouche pour permettre une rotation manuelle du dispositif.

3. Cartouche selon la revendication 1 ou 2, caractérisée en outre par le fait que le boîtier (11) comprend une paroi intérieure (11f) divisant la cavité en deux zones, une zone contenant la bande qui est fermée sauf pour une ouverture (11b) de sortie de bande et une zone de protection de fichier qui est sensiblement fermée sauf pour l'ouverture d'accès (11c), grâce à quoi le passage de tout élément de contamination de la zone de protection de fichier vers la zone contenant la bande est empêché.

4. Cartouche selon la revendication 1, 2 ou 3, dans laquelle le disque (18) comporte une ouverture et peut tourner entre une première position dans laquelle une radiation (par exemple lumineuse) provenant d'une source de radiation (22) placée de façon appropriée traverse l'ouverture et tombe sur un moyen de détection (23) commandant la lecture/écriture et une seconde position dans laquelle la radiation tombe sur le disque (18) et ne peut pas, de ce fait, atteindre le moyen de détection (23), caractérisée en outre par le fait qu'un segment (18a) du disque (18) a été enlevé pour constituer l'ouverture.

5. Cartouche selon la revendication 1, 2 ou 3, caractérisée en outre par le fait que la périphérie du disque (18) est profilée sur son bord de manière que la position de rotation du disque puisse être détectée par un moyen de détection (33) comprenant un poussoir (31) portant contre le bord profilé et traversant l'ouverture d'accès (11c) de l'une des parois périphériques (11a) du boîtier (11).

6. Cartouche selon l'une quelconque des revendications 1 à 5, caractérisée en outre par le fait que le dispositif d'actionnement (16) comprend un moyen (17b) visible de l'extérieur de la cartouche et indiquant la position de rotation du dispositif d'actionnement.

FIG.1

FIG.2

FIG.3

1

FIG. 4

FIG. 5

FIG. 8

FIG. 6

FIG. 7